# FASCICULE DE BREVET EUROPEEN

(11) **EP 3 273 576 B1**
(45) Date de publication et mention de la délivrance du brevet: **29.04.2020**
(21) Numéro de dépôt: 17181698.6
(22) Date de dépôt: 17.07.2017
(51) Int. Cl.: H02K 5/06, H02K 5/04, H02K 5/15, H02K 1/18

(54) **CARCASSE DE STATOR DE MOTEUR SOUDÉE ET PROCÉDÉ DE FABRICATION CORRESPONDANT**
GESCHWEISSTES MOTORSTATORGEHÄUSE UND ENTSPRECHENDES HERSTELLUNGSVERFAHREN
WELDED STATOR FRAME FOR AN ELECTRIC MOTOR AND ASSOCIATED MANUFACTURING PROCESS

(30) Priorité: 22.07.2016 FR 1657053
(43) Date de publication de la demande: 24.01.2018
(73) Titulaire: ALSTOM Transport Technologies, 93400 Saint-Ouen (FR)
(72) Inventeur: RAGUIN, Bruno, 25290 ORNANS (FR); LOMBARD, Jean-Pierre, 25480 MISEREY-SALINES (FR); TRIMAILLE, Gaëtan, 25440 Chenecey-Buillon (FR)
(74) Mandataire: Lavoix

(56) Documents cités:
- WO-A1-2015/120093
- CN-A- 102 052 378
- DE-U1-202004 002 527
- JP-A- H10 225 042
- US-A- 3 844 024
- US-A- 3 858 067
- US-A1- 2013 109 526
- US-A1- 2014 367 971

## Description

La présente invention concerne une carcasse selon le préambule de la revendication 1.

Cette carcasse est destinée à recevoir un rotor de moteur électrique, notamment un moteur électrique participant à la propulsion d'un véhicule ferroviaire.

Un véhicule ferroviaire comporte généralement plusieurs moteurs de ce type, positionnés sur les bogies et entrainant les roues. Pour ce faire, les moteurs électriques transforment en mouvement rotatif une puissance électrique produite par la génératrice du véhicule ou directement fournie depuis un câble d'alimentation.

Ces moteurs sont généralement composés d'une partie rotative, le rotor, et d'une partie fixe, le stator, fixée dans une carcasse qui joue un rôle de protection et d'isolation du moteur et reçoit un circuit de refroidissement du moteur.

La carcasse est une enveloppe métallique, généralement en alliage de fer pour une résistance mécanique maximale, par exemple en fonte ou en acier. Plusieurs méthodes de fabrication d'une telle carcasse de moteur sont connues.

Une première méthode consiste à mouler la carcasse en une seule pièce, généralement en fonte, ce qui présente des avantages notamment en termes de coût. De plus, une carcasse en une seule pièce est plus rigide et solide. Cependant, la carcasse ainsi obtenue est lourde et encombrante.

Pour réduire la masse de la carcasse, il est connu d'utiliser une structure en plusieurs pièces soudées entre elles, comprenant notamment deux plateaux d'extrémité reliés par des barreaux parallèles. Pour compenser la résistance plus faible d'une telle structure, on utilise généralement de l'acier pour toutes les pièces, ce qui permet de souder les pièces entre elles, mais augmente sensiblement le coût de fabrication de la carcasse. De plus, une carcasse composée de plusieurs pièces soudées est plus susceptible de subir des distorsions sous l'effet de contraintes internes créées par le refroidissement des zones de soudure. Ces distorsions peuvent se répercuter sur le stator, ce qui peut nuire au bon fonctionnement du moteur électrique en formant des points chaud ou un balourd magnétique.

Des carcasses de moteur électrique sont décrites dans les documents US 3 858 067 A, US 3 844 024 A, WO 2015/120093 A1, US 2014,367971 A1, JP10225042, CN102052378A et DE 0 2004 002527 U1.

Un but de l'invention est de fournir une carcasse de stator de moteur plus résistante aux distorsions et moins couteuse, tout en conservant un encombrement réduit.

A cet effet, l'invention concerne une carcasse selon la revendication 1.

Une telle carcasse présente des avantages en terme d'encombrement par rapport à la carcasse moulée en fonte, n'étant pas réalisée en une seule pièce et présentant ainsi une structure moins massive. La carcasse est également moins couteuse qu'une carcasse réalisée à partir de pièces en acier soudées entre elles, puisque les parties les plus massives, comme les plateaux, sont réalisées en fonte.

Selon des modes de réalisation particuliers, la carcasse de moteur selon l'invention présente une ou plusieurs des caractéristiques des revendications 2 à 6, prises isolément ou selon toute combinaison techniquement possible.

L'invention concerne également un procédé de fabrication selon la revendication 7.

Selon des modes de réalisation particuliers, le procédé selon l'invention comprend les caractéristiques des revendications 8 à 10, prises isolément ou selon toute combinaison techniquement possible.

L'invention sera mieux comprise à la lecture de la description qui va suivre, donnée uniquement à titre d'exemple et faite en référence aux dessins annexés, parmi lesquels :
- la figure 1 est une vue en perspective d'une carcasse de moteur selon l'invention ;
- la figure 2 représente un premier insert de la carcasse de moteur de la figure 1 ;
- la figure 3 représente un deuxième insert de la carcasse de moteur ;
- la figure 4 est une vue en coupe d'un barreau reliant les plateaux de la carcasse de moteur,
- la figure 5 est une vue en coupe d'une soudure d'un barreau à un insert ; et
- la figure 6 est une représentation en coupe de la soudure après arasage.

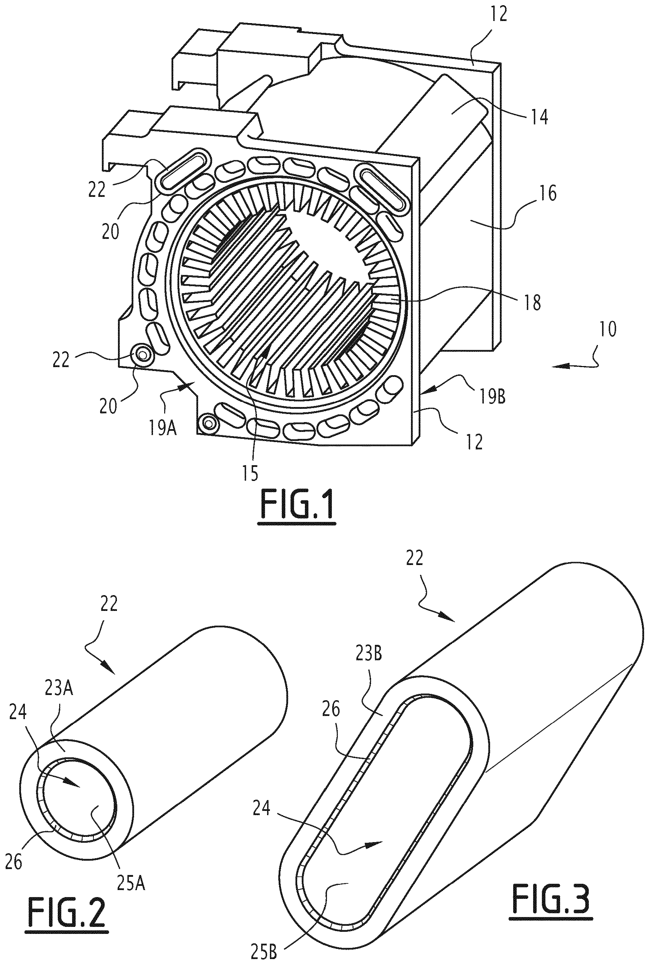

Une carcasse 10 de stator de moteur représentée sur la figure 1 comporte deux plateaux 12 sensiblement parallèles et au moins un barreau 14 reliant les deux plateaux 12.

Les deux plateaux 12 présentent en outre une ouverture centrale 15 par exemple circulaire, permettant l'insertion d'un rotor dans la carcasse 10.

Avantageusement, la carcasse 10 comprend des parois latérales 16 assemblées par bridage entre les deux plateaux 12 et aptes à contenir et protéger un stator 18 de moteur électrique.

Les plateaux 12 sont moulés en fonte et sont sensiblement plans et présentent une face intérieure 19B et une face extérieure 19A. Les deux plateaux 12 comportent de plus au moins un orifice 20 traversant, percé dans le plateau 12.

Par traversant, on entend que l'orifice 20 est ouvert à ses deux extrémités et débouche sur la face intérieure 19B et sur la face extérieure 19A du plateau 12.

Selon un premier mode de réalisation, l'orifice 20 comporte un tronçon intérieur 21A de même section que le barreau 14 reçu par l'orifice 20 et un tronçon extérieur 21B de section plus importante que le tronçon 21A. Le tronçon intérieur 21A et le tronçon extérieur 21B sont reliés par une face transversale 21C, perpendiculaire à un axe de l'orifice 20.

Chaque orifice 20 reçoit un insert 22, en acier, de fixation du barreau 14.

Le tronçon extérieur 21B de l'orifice 20 sert de siège à l'insert 22, qui vient en appui contre la face transversale 21C.

L'insert 22 est une douille en acier de forme adaptée à son insertion dans un orifice 20 du plateau en fonte 12, le contour extérieur de l'insert 22 étant complémentaire du contour intérieur du tronçon extérieur 21B.

Ainsi, selon le mode de réalisation représenté sur les figures 1 à 3, l'insert 22 présente soit une section en couronne circulaire correspondant à une section circulaire 23A du barreau 14, comme représenté figure 2, soit une section en couronne oblongue, correspondant à une section oblongue 23B du barreau 14, comme représenté figure 3.

La longueur de l'insert 22 est égale à la longueur du tronçon extérieur 21B, donc inférieure à l'épaisseur du plateau 12, c'est-à-dire inférieure à la distance entre la face intérieure 19B et la face extérieure 19A du plateau 12. Par exemple, la longueur de l'insert 22 est égale à la moitié de l'épaisseur du plateau 12.

L'insert 22 présente en outre un conduit central 24 traversant, recevant un barreau 14 en acier. Le conduit traversant 24 a soit une section circulaire 25A dans le cas où l'insert 22 est inséré dans un orifice 20 à section circulaire, comme l'insert 22 représenté sur la figure 2, soit une section oblongue, dans le cas où l'insert 22 est inséré dans un orifice 20 à section oblongue, comme l'insert 22 représenté sur la figure 3.

Au moins une des arêtes délimitant l'intérieur du conduit central 24 est une arête chanfreinée 26. Par chanfreinée, on entend que l'arête 26 est abattue et forme une surface plane reliant les deux faces adjacentes à l'arête 26 et forme avec ces deux faces des angles complémentaires compris entre 0 et 90°, par exemple égaux à 45°. Avantageusement, l'arête chanfreinée 26 s'étend dans le plan de la face extérieure 19A du plateau 12 dans lequel l'insert 22 se trouve. Selon d'autres modes de réalisation non représentés, l'arête chanfreinée 26 s'étend dans le plan de la face intérieure 19B du plateau 12 contenant l'insert 22, ou bien encore les deux arêtes délimitant le conduit central 24 sont chanfreinées.

Le barreau 14 est de type tirant, en acier, et a soit une section circulaire, complémentaire du conduit central 24 de section circulaire 25A de l'insert 22 représenté sur la figure 2, soit une section oblongue, complémentaire du conduit central 24 de section similaire 25B, représenté sur la figure 3.

Le barreau 14 présente à ses deux extrémités 28 des faces dont les bords 30 sont chanfreinés. Par chanfreiné, on entend que le bord 30 est abattu et forme une surface plane reliant les deux faces adjacentes au bord 30 et forme avec ces deux faces des angles complémentaires compris entre 0 et 90°.

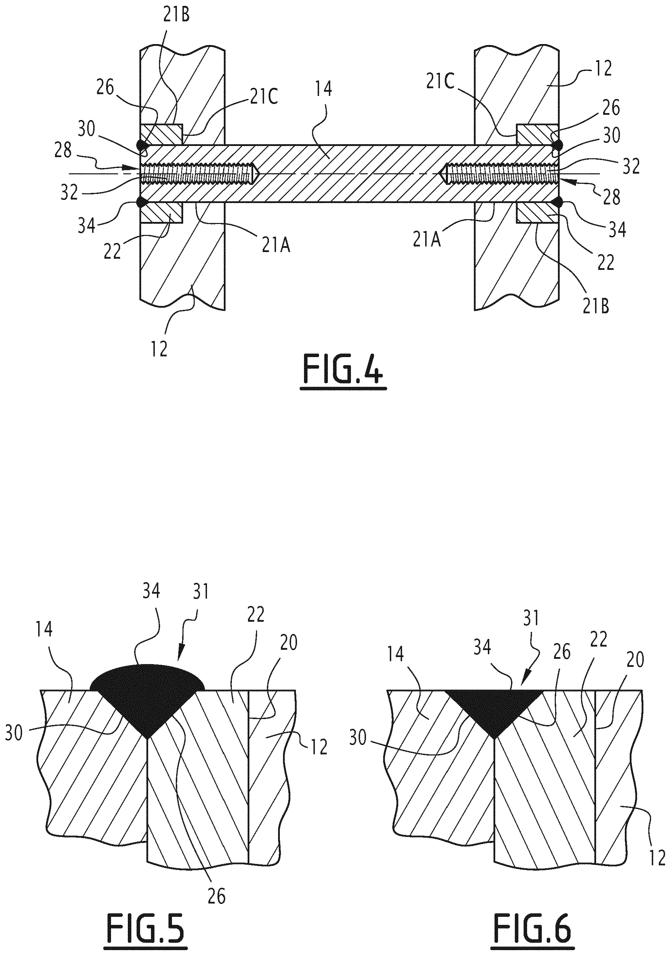

Chaque extrémité 28 du barreau 14 est engagée dans le conduit central 24 d'un insert 22, comme représenté figure 4. Avantageusement, l'extrémité 28 du barreau 14 est dans le plan de la face extérieure 19A du plateau 12,

Dans le cas avantageux où l'arête chanfreinée 26 du conduit central 24 de l'insert 22 est située dans le plan de la face extérieure 19A du plateau 12, l'arête chanfreinée 26 et le bord chanfreiné 30 du barreau 14 coopèrent pour former une encoche 31 présentant une section en forme de V, comme représenté sur la figure 4.

Avantageusement, chaque extrémité 28 d'au moins un des barreaux 14 présente une ouverture filetée 32 percée dans le barreau 14. Cette ouverture filetée 32 est apte à recevoir une vis de fixation d'un flasque d'extrémité fermant l'ouverture circulaire du plateau 12 et protégeant ainsi le rotor contenu dans la carcasse 10.

Le barreau 14 est maintenu engagé dans l'insert 22 par une soudure 34. La soudure 34 est une soudure « en V » remplissant l'encoche 31 comprise entre l'arête chanfreinée 26 du conduit central 24 de l'insert 22 et le bord chanfreiné 30 de l'extrémité 28 du barreau 14, comme représenté figure 5.

Avantageusement, la soudure 34 est arasée pour présenter un profil plat affleurant à la surface formée par l'extrémité 28 du barreau 14, l'insert 22 et le plateau 12, comme représenté figure 6.

L'encoche 31 étant située sur la face extérieure, la soudure 34 est positionnée sur une face extérieure du plateau en fonte 12, ce qui réduit les risques de distorsion de la carcasse 10 lors du refroidissement. Ce cas simplifie aussi le procédé de soudage, en permettant un meilleur accès à la zone concernée depuis l'extérieur.

Un procédé de fabrication de la carcasse 10 selon le mode de réalisation de la figure 1 va maintenant être décrit.

Ce procédé comporte les étapes préliminaires suivantes :
- moulage de deux plateaux 12 en fonte, présentant chacun une face intérieure 19B et une face extérieure 19A ;
- perçage d'au moins un orifice 20 dans les plateaux 12, l'orifice 20 comportant un tronçon intérieur 21A et un tronçon extérieur 21B, reliés par une face transversale 21C ;
- fourniture d'un insert en acier 22 de forme adaptée pour chaque orifice 20, présentant un conduit central 24 présentant au moins une arête 26 chanfreinée ;
- introduction de l'insert 22 dans le tronçon extérieur 21B de l'orifice 20, en appui sur la face transversale 21C, l'arête chanfreinée 26 étant orientée vers la face extérieure 19A du plateau 22 ;
- fourniture d'au moins un barreau 14 en acier présentant deux extrémités 28 aux bords 30 chanfreinés ;

Le procédé comprend ensuite une étape d'introduction de chaque extrémité 28 de chaque barreau 14 dans le conduit central 24 d'un des inserts 22. L'extrémité 28 de chaque barreau est alignée avec la face extérieure 19A du plateau 12, de sorte que la carcasse 10 présente une surface externe plane.

Les barreaux 14 sont ensuite fixés aux inserts 22 par une soudure 34, faite dans l'encoche 31 « en V » formée par les arêtes chanfreinées 26 des conduits centraux 24 des inserts 22 et les bords chanfreinés 30 des extrémités 28 des barreaux 14.

Les faces extérieures 19A des plateaux 12 sont ensuite aplanies par arasage des soudures 34, c'est à dire en retirant le matériau excédentaire pour obtenir un profil plat.

Le procédé comporte enfin une étape de perçage d'une ouverture filetée 32 dans chaque extrémité 28 d'au moins un des barreaux 14, l'ouverture filetée 32 étant apte à recevoir ultérieurement une vis de fixation d'un flasque d'extrémité.

La carcasse 10 et le procédé de réalisation décrits ci-dessus peuvent être modifiés tout en restant conformes à l'invention.

Les formes des orifices 20, des inserts 22 et des barreaux 14 peuvent également varier.

Par exemple, selon un autre mode de réalisation, les orifices 20 peuvent comporter un unique tronçon de section constante, et les inserts 22 peuvent présenter un épaulement à une extrémité, situé sur une surface externe, apte à venir en appui contre la face extérieure 19A du plateau 12. Avantageusement, la face extérieure 19A peut présenter un lamage adapté pour contenir l'épaulement de l'insert 22.

La carcasse selon l'invention présente des avantages notables, en termes de coût puisque la plus grande partie de sa structure est réalisée en fonte peu coûteuse, en termes de légèreté puisqu'il a une structure composée de deux plateaux reliés par des tirants et non moulée en une seule pièce massive, et enfin en termes de résistance aux distorsions de refroidissement des soudures.
- fourniture d'un insert en acier 22 de forme adaptée pour chaque orifice 20, présentant un conduit central 24 présentant au moins une arête 26 chanfreinée ;
- introduction de l'insert 22 dans le tronçon extérieur 21B de l'orifice 20, en appui sur la face transversale 21C, l'arête chanfreinée 26 étant orientée vers la face extérieure 19A du plateau 22 ;
- fourniture d'au moins un barreau 14 en acier présentant deux extrémités 28 aux bords 30 chanfreinés ;

Le procédé comprend ensuite une étape d'introduction de chaque extrémité 28 de chaque barreau 14 dans le conduit central 24 d'un des inserts 22. L'extrémité 28 de chaque barreau est alignée avec la face extérieure 19A du plateau 12, de sorte que la carcasse 10 présente une surface externe plane.

Les barreaux 14 sont ensuite fixés aux inserts 22 par une soudure 34, faite dans l'encoche 31 « en V » formée par les arêtes chanfreinées 26 des conduits centraux 24 des inserts 22 et les bords chanfreinés 30 des extrémités 28 des barreaux 14.

Les faces extérieures 19A des plateaux 12 sont ensuite aplanies par arasage des soudures 34, c'est à dire en retirant le matériau excédentaire pour obtenir un profil plat.

Le procédé comporte enfin une étape de perçage d'une ouverture filetée 32 dans chaque extrémité 28 d'au moins un des barreaux 14, l'ouverture filetée 32 étant apte à recevoir ultérieurement une vis de fixation d'un flasque d'extrémité.

La carcasse 10 et le procédé de réalisation décrits ci-dessus peuvent être modifiés tout en restant conformes à l'invention.

Les formes des orifices 20, des inserts 22 et des barreaux 14 peuvent également varier.

Par exemple, selon un autre mode de réalisation, les orifices 20 peuvent comporter un unique tronçon de section constante, et les inserts 22 peuvent présenter un épaulement à une extrémité, situé sur une surface externe, apte à venir en appui contre la face extérieure 19A du plateau 12. Avantageusement, la face extérieure 19A peut présenter un lamage adapté pour contenir l'épaulement de l'insert 22.

La carcasse selon l'invention présente des avantages notables, en termes de coût puisque la plus grande partie de sa structure est réalisée en fonte peu coûteuse, en termes de légèreté puisqu'il a une structure composée de deux plateaux reliés par des tirants et non moulée en une seule pièce massive, et enfin en termes de résistance aux distorsions de refroidissement des soudures.

## Revendications

1. Carcasse (10) de protection de stator de moteur comprenant :
- deux plateaux (12) d'extrémité en fonte ;
- au moins un barreau (14) en acier reliant les deux plateaux (12), le barreau (14) présentant deux extrémités (28) fixées chacune à un des plateaux (12) ; et
- des parois latérales (16) assemblées entre les plateaux (12), aptes à contenir et à protéger le stator,
**caractérisée en ce que** chaque plateau (12) en fonte présente au moins un orifice (20) recevant un insert (22) en acier, l'extrémité (28) du barreau (14) fixée au plateau (12) étant soudée audit insert (22).

2. Carcasse (10) selon la revendication 1, dans laquelle le ou les orifices (20) recevant les inserts (22) traversent les plateaux (12), les inserts (22) présentant un conduit central (24) traversant, apte à recevoir le barreau (14).

3. Carcasse (10) selon la revendication 2, dans laquelle chaque extrémité (28) de chaque barreau (14) présente un bord chanfreiné (30) et dans lequel chaque conduit central (24) de chaque insert (22) présente au moins une arête chanfreinée (26).

4. Carcasse (10) selon la revendication 3, dans laquelle l'arête chanfreinée de chaque conduit central (24) de chaque insert (22) est située du côté d'une face extérieure (19A) du plateau (12), et forme avec le bord chanfreiné (30) de l'extrémité (28) du barreau (14) une encoche (31) dans laquelle est faite une soudure (34) liant chaque extrémité (28) de chaque barreau (14) en acier à l'insert (22) qui la reçoit.

5. Carcasse (10) selon l'une quelconque des revendications précédentes, dans laquelle des soudures (34) liant les extrémités (28) de chaque barreau (14) aux inserts (22) sont sensiblement planes et dans lequel les inserts (22) et les extrémités (28) des barreaux (14) affleurent aux faces extérieures (19A) des plateaux (12).

6. Carcasse (10) selon l'une quelconque des revendications précédentes, dans laquelle les extrémités (28) de chaque barreau (14) présentent des ouvertures filetées (32), aptes à recevoir des vis de fixation de flasques d'extrémité sur les plateaux (12).

7. Procédé de fabrication d'une carcasse (10) selon l'une quelconque des revendications précédentes, comprenant les étapes suivantes :
- fourniture de deux plateaux (12) d'extrémité en fonte, présentant une face intérieure (19B) et une face extérieure (19A), et des orifices (20) traversant recevant des inserts (22) en acier ;
- fourniture d'au moins un barreau (14) en acier ;
- fourniture de parois latérales (16) et assemblage des parois latérales (16) entre les plateaux (12) ;
- soudure des extrémités (28) de chaque barreau (14) à un des inserts (22) de chacun des plateaux (12) ;

8. Procédé de fabrication selon la revendication 7, dans lequel les inserts (22) présentent un conduit central (24) traversant, le procédé comprenant une étape d'insertion des extrémités (28) des barreaux (14) dans des conduits centraux (24) des inserts (22), sans que l'extrémité (28) ne dépasse de la face extérieure (19A) du plateau (12).

9. Procédé de fabrication selon la revendication 8, dans lequel les extrémités (28) des barreaux (14) présentent des bords chanfreinés (30) et dans lequel les conduits centraux (24) des inserts (22) présentent une arête chanfreinée (26) située du côté de la face extérieure (19A) du plateau (12), les bords chanfreinés (30) et les arêtes chanfreinées (26) formant une encoche (31) présentant une section en V, une soudure (34) liant chaque extrémité (28) de chaque barreau (14) à l'insert (22) qui la reçoit étant faite dans ladite encoche (31).

10. Procédé de fabrication selon la revendication 9, comprenant une étape de perçage d'une ouverture filetée (32) dans chaque extrémité (28) de chaque barreau (14) et une étape d'arasage des soudures (34) au niveau des faces extérieures (19A) des plateaux (12), en retirant l'excès de matériau dépassant des plateaux (12).

## Patentansprüche

1. Gehäuse (10) zum Schutz eines Motorstators, umfassend:
- zwei Gussendplatten (12);
- mindestens einen Stab (14) aus Stahl, der die zwei Platten (12) verbindet, wobei der Stab (14) zwei Enden (28) aufweist, die jeweils an eine der Platten (12) fixiert sind; und
- Seitenwände (16), die zwischen den Platten (12) zusammengebaut sind, die ausgelegt sind, um den Stator zu enthalten und zu schützen,
**dadurch gekennzeichnet, dass** jede Gussplatte (12) mindestens eine Öffnung (20) aufweist, die einen Einsatz (22) aus Stahl aufnimmt, wobei das Ende (28) des Stabs (14), das an die Platte (12) fixiert ist, an den Einsatz (22) geschweißt ist.

2. Gehäuse (10) nach Anspruch 1, wobei die Öffnung(en) (20), die die Einsätze (22) aufnehmen, die Platten (12) queren, wobei die Einsätze (22) eine zentrale Querleitung (24) darstellen, die ausgelegt ist, um den Stab (14) aufzunehmen.

3. Gehäuse (10) nach Anspruch 2, wobei jedes Ende (28) jedes Stabs (14) einen abgeschrägten Rand (30) aufweist, und wobei jede zentrale Leitung (24) jedes Einsatzes (22) mindestens einen abgeschrägten Grat (26) aufweist.

4. Gehäuse (10) nach Anspruch 3, wobei sich der abgeschrägte Grat jeder zentralen Leitung (24) jedes Einsatzes (22) auf der Seite einer äußeren Fläche (19A) der Platte (12) befindet und mit dem abgeschrägten Rand (30) des Endes (28) des Stabs (14) eine Nut (31) bildet, in der eine Schweißung (34) durchgeführt ist, die jedes Ende (28) jedes Stabs (14) aus Stahl mit dem Einsatz (22), der sie aufnimmt, verbindet.

5. Gehäuse (10) nach einem der vorhergehenden Ansprüche, wobei die Schweißungen (34), die die Enden (28) jedes Stabs (14) mit den Einsätzen (22) verbinden, im Wesentlichen eben sind, und wobei die Einsätze (22) und die Enden (28) der Stäbe (14) an den äußeren Flächen (19A) der Platten (12) zum Vorschein kommen.

6. Gehäuse (10) nach einem der vorhergehenden Ansprüche, wobei die Enden (28) jedes Stabs (14) gewindegeschnittene Öffnungen (32) aufweisen, die ausgelegt sind, um Schrauben zur Fixierung der Endflansche auf den Platten (12) aufzunehmen.

7. Verfahren zur Herstellung eines Gehäuses (10) nach einem der vorhergehenden Ansprüche, umfassend die folgenden Schritte:
- Liefern von zwei Gussendplatten (12), die eine innere Seite (19B) und eine äußere Seite (19A) aufweisen, und Queröffnungen (20), die Einsätze (22) aus Stahl aufnehmen;
- Liefern von mindestens einem Stab (14) aus Stahl;
- Liefern von Seitenwänden (16) und Zusammenbau der Seitenwände (16) zwischen den Platten (12);
- Schweißen der Enden (28) jedes Stabs (14) an einen der Einsätze (22) jeder der Platten (12).

8. Verfahren zur Herstellung nach Anspruch 7, wobei die Einsätze (22) eine zentrale Querleitung (24) darstellen, wobei das Verfahren einen Schritt des Einführens der Enden (28) der Stäbe (14) in die zentralen Leitungen (24) der Einsätze (22) umfasst, ohne dass das Ende (28) die äußere Fläche (19A) der Platte (12) überragt.

9. Verfahren zur Herstellung nach Anspruch 8, wobei die Enden (28) der Stäbe (14) abgeschrägte Kanten (30) aufweisen, und wobei die zentralen Leitungen (24) der Einsätze (22) einen abgeschrägten Grat (26) aufweisen, der sich auf der Seite der äußeren Fläche (19A) der Platte (12) befindet, wobei die abgeschrägten Ränder (30) und die abgeschrägten Grate (26), die eine Nut (31) bilden, einen V-förmigen Abschnitt aufweisen, wobei eine Schweißung (34) jedes Ende (28) jedes Stabs (14) mit dem Einsatz (22) verbindet, der sie aufnimmt, der die in der Nut (31) gebildet ist.

10. Verfahren zur Herstellung nach Anspruch 9, umfassend einen Schritt des Bohrens einer gewindegeschnittenen Öffnung (32) in jedes Ende (28) jedes Stabs (14) und einen Schritt des Abschleifens der Schweißungen (34) auf der Ebene der äußeren Flächen (19A) der Platten (12), indem das überschüssige Material, das aus den Platten (12) hervorsteht, entfernt wird.

## Claims

1. Motor stator frame (10) comprising:
- two end plates (12) in cast iron;
- at least one bar (14) in steel connecting both plates (12), the bar (14) having two ends (28) each attached to one of the plates (12); and
- side walls (16) assembled between the plates (12), able to contain and protect the stator,
**characterized in that** each plate (12) in cast iron has at least one orifice (20) receiving an insert (22) in steel, the end (28) of the bar (14) attached to the plate (12) being welded to said insert (22).

2. Frame (10) according to claim 1, wherein the orifices (20) receiving the inserts (22) cross the plates (12), the inserts (22) having a central through-conduit (24) able to receive the bar (14).

3. Frame (10) according to claim 2, wherein each end (28) of each bar (14) has a chamfered edge (30) and wherein each central conduit (24) of each insert (22) has at least one chamfered edge (26).

4. Frame (10) according to claim 3, wherein the chamfered edge of each central conduit (24) of each insert (22) is located on the side of an outer face (19A) of the plate (12), and forms with the chamfered edge (30) of the end (28) of the bar (14) a notch (31) in which is made a weld (34) connecting each end (28) of each bar (14) in steel to the insert (22) which receives it.

5. Frame (10) according to any of the preceding claims, wherein the welds (34) connecting the ends (28) of each bar (14) to the inserts (22) are substantially planar and wherein the inserts (22) and the ends (28) of the bars (14) are flushed with the outer faces (19A) of the plates (12).

6. Frame (10) according to any of the preceding claims, wherein the ends (28) of each bar (14) have threaded apertures (32), able to receive screws for attaching end flanges onto the plates (12).

7. Method for manufacturing a frame (10) according to any of the preceding claims, comprising the following steps:
- providing two end plates (12) in cast iron, having an inner face (19B) and an outer face (19A), and through-orifices (20) receiving steel inserts (22);
- providing at least one bar (14) in steel;
- providing side walls (16) and assembling the side walls (16) between the plates (12); and
- welding the ends (28) of each bar (14) to one of the inserts (22) of each of the plates (12).

8. Manufacturing method according to claim 7, wherein the inserts (22) have a central through-conduit (24), the method comprising a step for inserting the ends (28) of the bars (14) into the central conduits (24) of the inserts (22), without the end (28) jutting out from the outer face (19A) of the plate (12).

9. Manufacturing method according to claim 8, wherein the ends (28) of the bars (14) have chamfered edges (30) and wherein the central conduits (24) of the inserts (22) have a chamfered edge (26) located on the side of the outer face (19A) of the plate (12), the chamfered edges (30) and the chamfered edges (26) forming a notch (31) having a V-shaped section, a weld (34) connecting each end (28) of each bar (14) to the insert (22) which receives it being made in said notch (31).

10. Manufacturing method according to claim 9, comprising a step of piercing a threaded aperture (32) in each end (28) of each bar (14) and a step of leveling the welds (34) at the outer faces (19A) of the plates (12), by removing the excess material jutting out from the plates (12).
